# EUROPÄISCHE PATENTSCHRIFT

(11) **EP 3 775 971 B1**
(45) Veröffentlichungstag und Bekanntmachung des Hinweises auf die Patenterteilung: **05.08.2026**
(21) Anmeldenummer: 19714418.1
(22) Anmeldetag: 28.03.2019
(51) Int. Cl.: G01S 15/931, B60Q 9/00, G01S 15/87, G01S 7/00

(54) **ULTRASCHALLSENSOR MIT POWERLINE-KOMMUNIKATION**
ULTRASONIC SENSOR WITH POWER-LINE COMMUNICATION
CAPTEUR À ULTRASONS COMPRENANT UNE COMMUNICATION PAR LIGNE ÉLECTRIQUE CLASSIQUE

(30) Priorität: 03.04.2018 DE 102018107827
(43) Veröffentlichungstag der Anmeldung: 17.02.2021
(73) Patentinhaber: Valeo Schalter und Sensoren GmbH, 74321 Bietigheim-Bissingen (DE)
(72) Erfinder: SALOMON, Sylvio, 74321 Bietigheim-Bissingen (DE); JUNG, Thomas, 74321 Bietigheim-Bissingen (DE); JAEGER, Steffen, 74321 Bietigheim-Bissingen (DE)
(74) Vertreter: Pothmann, Karsten
(86) Internationale Anmeldenummer: PCT/EP2019/057824
(87) Internationale Veröffentlichungsnummer: WO 2019/192919

(56) Entgegenhaltungen:
- WO-A1-2009/040155
- WO-A1-2009/130725
- DE-A1- 102012 222 891

## Beschreibung

Die vorliegende Erfindung betrifft einen Ultraschallsensor zur Verwendung in einem Abstandserkennungssystem für ein Fahrzeug, wobei der Ultraschallsensor zur gemeinsamen Anbringung mit wenigstens einem weiteren Ultraschallsensor ausgeführt ist.

Auch betrifft die vorliegende Erfindung ein Abstandserkennungssystem für ein Fahrzeug mit einer Mehrzahl obiger Ultraschallsensoren.

Heutige Abstandserkennungssysteme basieren zumeist auf Ultraschallsensoren, die beispielsweise an einer Vorder- und/oder einer Rückseite des Fahrzeugs angebracht sind. Die Ultraschallsensoren können an der Vorder- bzw. der Rückseite des Fahrzeugs in oder an einem dortigen Stoßfänger montiert sein. Die Ultraschallsensoren senden im einfachsten Fall ein Ultraschallsignal aus, beispielsweise als Ultraschallpuls. Basierend auf Echos von Ultraschallsignalen, die jeweils von dem Ultraschallsensor empfangen werden, erfolgt eine Umfelderfassung um das Fahrzeug, üblicherweise in einem Bereich hinter und/oder vor dem Fahrzeug. Jeder der Ultraschallsensoren ist somit einerseits zum Aussenden von Ultraschallsignalen und andererseits zum Empfang der von Objekten in der Nähe erzeugten Echos ausgeführt. Die Auswertung dieser Echos ermöglicht Rückschlüsse auf die Positionen und die räumliche Ausdehnung der Objekte, insbesondere zur Erfassung von nahen Hindernissen in einem Fahrweg.

Die Ansteuerung der Ultraschallsensoren, das Auslesen und das Verarbeiten der Messdaten sowie die Generierung von darauf basierenden Informationen zur Benachrichtigung des Fahrers über eine Situation im Umfeld des Fahrzeugs erfolgt für gewöhnlich mittels eines eigens dafür vorgesehenen Steuergerätes. Jeder der Ultraschallsensoren ist dabei individuell an das Steuergerät angeschlossen, so dass das Steuergerät Sensorinformationen der einzelnen Ultraschallsensoren gemeinsam auswertet. Darauf basierend kann ein Abstand des Fahrzeugs von dem Hindernis bestimmt werden, und darauf basierend eine Warnung mit einer Warneinrichtung ausgegeben werden. Alternativ kann die Warnung auch ohne eine Bestimmung des Abstands ausgegeben werden, indem lediglich eine grobe Unterteilung beispielsweise in nahe Objekte, Objekte in einer mittleren Entfernung und ferne Objekte durchgeführt wird. Die Warnung wird üblicherweise mit einem Lautsprecher als Warneinrichtung ausgegeben, indem beispielsweise ein charakteristisches Piepen abhängig von der Entfernung des Objekts ausgegeben wird. Zusätzlich oder alternativ kann die Warneinrichtung ein Display umfassen, auf dem ein Abstand zu dem Hindernis angezeigt werden kann. Entsprechend können die hier betrachteten Abstandserkennungssysteme auch als Abstandswarnsysteme bezeichnet werden, die bei einer Unterschreitung verschiedener Abstände des Fahrzeugs zu einem Objekt eine Warnung erzeugen.

Ein großer Teil der Kosten für derartige Abstandserkennungssysteme wird durch das Steuergerät verursacht. Eine Möglichkeit, die Systemkosten deutlich zu reduzieren, basiert auf der Idee, auf das Steuergerät zu verzichten. Weitere damit einhergehende positive Effekte sind eine Masseeinsparung und ein geringerer Platzbedarf.

Ein entsprechendes Verfahren zur Steuerung von Sensoren, insbesondere für ultraschallbasierte Abstandserkennungssysteme in einem Fahrzeug ist beispielsweise aus der WO 2010/025864 A1 bekannt. Dabei kommunizieren die Sensoren mit einer Signalisierungseinrichtung für vorgegebene Abstandsdetektionen. Jeweils ein Sensor aus einer Mehrzahl von Sensoren wird durch ein von einem Zufallsgenerator getriggertes Signal zur Generierung eines Sendesignals veranlasst. Anhand des von einem Objekt reflektierten Ultraschallsignals wird daraufhin der Abstand ermittelt und direkt zur Ansteuerung der Signalisierungseinrichtung verwendet. Die Ultraschallsensoren synchronisieren sich also selbstständig und können einen Tongeber zur akustischen Ausgabe von Abstandsinformationen direkt ansteuern.

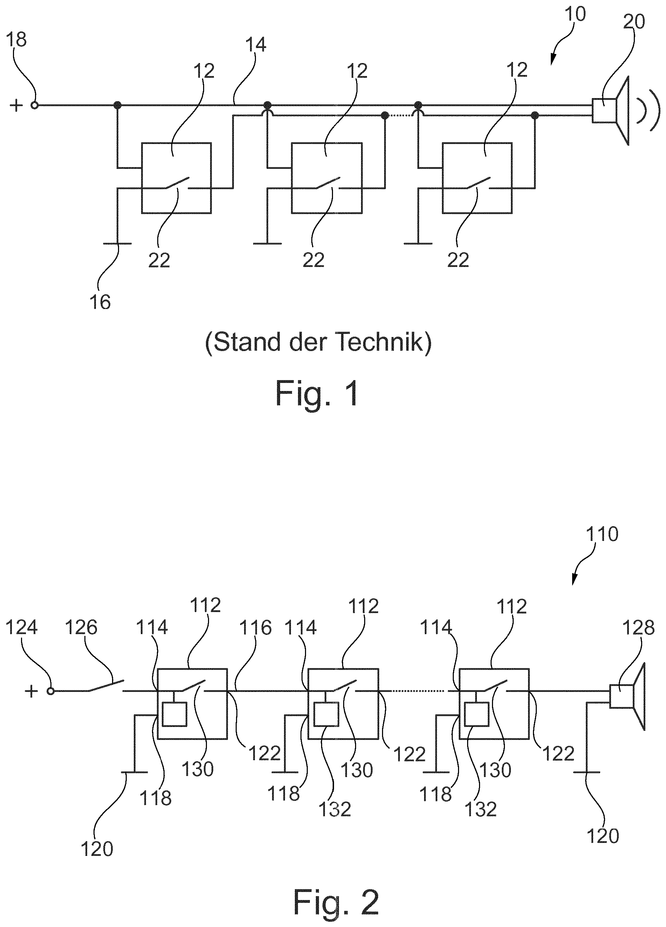

Ein solches Abstandserkennungssystem 10 aus dem genannten Stand der Technik ist beispielhaft in Fig. 1 dargestellt. Das System umfasst eine Mehrzahl Ultraschallsensoren 12, die parallel zwischen einer elektrischen Versorgungsleitung 14 und einer Masse 16 angeordnet sind. Die Versorgungsleitung 14 ist auf einer Seite mit einer Versorgungsspannung 18 verbunden, und auf einer anderen Seite mit einer Warneinheit 20. Ein Masseausgang der Warneinheit 20 ist ebenfalls parallel mit der Mehrzahl Ultraschallsensoren 12 verbunden. Jeder Ultraschallsensor 12 weist einen Schalter 22 auf, um den Masseausgang der Warneinheit 20 mit der Masse 16 verbinden zu können. Dadurch kann jeder Ultraschallsensor 12 durch schließen seines Schalters 22 einen Strom durch die Warneinheit 20 erzeugen, um ein Objekt in einem durch die Ultraschallsensoren 12 überwachten Bereich zu signalisieren.

Echos eines von einem Ultraschallsensor erzeugten Ultraschallpulses lassen sich bei diesem sehr einfachen und kostengünstigen System jedoch nicht von einem anderen Ultraschallsensor sinnvoll auswerten, wodurch der Detektionsbereich vergleichsweise klein ist. Wenn nur der von allen Ultraschallsensoren kleinste direkt gemessene Abstand zu einem Objekt signalisiert wird, kann es zudem vorkommen, dass der kürzeste Abstand zwischen dem Objekt und dem Fahrzeug trotzdem kleiner ist, da eine eindeutige Objektlokalisierung beispielsweise auf der Basis von Trilateration mit diesem System nicht möglich ist.

Aus der DE 103 25 374 A1 ist ein elektronisches System bekannt, das eine Anzahl von Ultraschallsensoren umfasst, von denen einer als Master-Sensor ausgebildet ist. Das System kommt somit ohne ein Steuergerät aus. Die Ultraschallsensoren können untereinander kommunizieren und der als Master betriebene Ultraschallsensor steuert mindestens einen anderen, als Slave betriebenen Ultraschallsensor. Es müssen die Positionen aller Ultraschallsensoren im Master hinterlegt und eindeutig zugeordnet sein, was zusätzliche und in der Regel kostenverursachende Maßnahmen erfordert. Auch wird der Aufbau des Systems dadurch komplexer, was auch eine aufwändigere Montage bedingt.

Aus der WO 2009130725 A1 ist ein Objekterfassungssystem mit mehreren Sensoren bekannt, die über einen gemeinsamen Daten-Bus mit einer Steuereinrichtung verbunden sind.

Ausgehend von dem oben genannten Stand der Technik liegt der Erfindung somit die Aufgabe zugrunde, einen Ultraschallsensor zur Verwendung in einem Abstandserkennungssystem für ein Fahrzeug und ein Abstandserkennungssystem für ein Fahrzeug mit einer Mehrzahl Ultraschallsensoren der oben genannten Art anzugeben, wobei die Vorteile einer einfachen und kostengünstigen Realisierung, eines vergleichsweise großen Detektionsbereiches sowie der zuverlässigen Objektdetektion vereint werden.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Ultraschallsensor zur Verwendung in einem Abstandserkennungssystem für ein Fahrzeug angegeben, wobei der Ultraschallsensor zur gemeinsamen Anbringung mit wenigstens einem weiteren Ultraschallsensor ausgeführt ist. Der Ultraschallsensor weist einen ersten Eingang zum Anschluss an eine Versorgungsleitung auf, der Ultraschallsensor weist weiterhin einen zweiten Eingang zum Anschluss an ein Massepotential des Fahrzeugs auf, und der Ultraschallsensor weist einen Ausgang zum Anschluss an die Versorgungsleitung auf. Der Ultraschallsensor ist ausgeführt, ein auf die Versorgungsleitung moduliertes Datensignal über den ersten Eingang zu empfangen, und über den Ausgang ein Datensignal auf die Versorgungsleitung zu modulieren.

Erfindungsgemäß ist außerdem ein Abstandserkennungssystem für ein Fahrzeug mit einer Mehrzahl obiger Ultraschallsensoren angegeben, wobei die Ultraschallsensoren nach der Art einer Kette hintereinander geschaltet sind, wobei der Ausgang eines vorhergehenden Ultraschallsensors mit dem ersten Eingang eines nachfolgenden Ultraschallsensors verbunden ist, ein in der Kette erster Ultraschallsensor mit seinem ersten Eingang an eine Versorgungsspannung angeschlossen ist, und ein in der Kette letzter Ultraschallsensor mit seinem Ausgang an eine Signalisierungseinheit angeschlossen ist.

Grundidee der vorliegenden Erfindung ist es also, Ultraschallsensoren bereitzustellen, die über eine Versorgungsleitung miteinander kommunizieren können, so dass die Ultraschallsensoren ohne weitere Steuerungseinrichtung interagieren können. Es findet eine Datenübertragung zwischen den Ultraschallsensoren auf der Basis von power-line communication (PLC) statt. Dadurch ist die Kommunikation zwischen den Ultraschallsensoren einfach möglich. Die Kommunikation über die Versorgungsleitung ist einfach zu realisieren und ermöglicht einen einfachen Aufbau der jeweiligen Ultraschallsensoren. Die Ultraschallsensoren sind außerdem zur gemeinsamen Anbringung nach der Art einer Kette ausgeführt. Prinzipiell können identische Ultraschallsensoren verwendet werden, um eine solche Kette zu bilden, wodurch eine Montage erleichtert wird und die Ultraschallsensoren kostengünstig in größerer Stückzahl bereitgestellt werden können. Dabei kann jeder Sensor trotzdem unterschiedlich in der Kette agieren, insbesondere als erster oder letzter Ultraschallsensor der Kette.

Die Hintereinanderschaltung der Ultraschallsensoren ermöglicht eine Kettenbildung, wobei jeder Ultraschallsensor über seinen vorhergehenden Ultraschallsensor mit elektrischer Energie versorgt. Dadurch kann die Verkabelung der Ultraschallsensoren untereinander auf ein Minimum reduziert werden. Auch kann das Abstandserkennungssystem insgesamt sehr einfach installiert werden mit nur einem Anschluss an eine Versorgungsspannung.

Der Ultraschallsensor hat einen an sich üblichen Aufbau mit einer Ultraschallmembran und einem Wandler, üblicherweise ein piezoelektrischer Wandler. Zusätzlich umfasst der Ultraschallsensor einen Modulator und einen Demodulator, um das auf die Versorgungsleitung modulierte Datensignal zu empfangen und das Datensignal auf die Versorgungsleitung zu modulieren.

Funktionsprinzipien von Ultraschallsensoren zur Abstandsbestimmung sind als solche bekannt und werden hier nicht gesondert erläutert.

Der erste Eingang dient zum Anschluss an die Versorgungsleitung. Zusammen mit dem zweiten Eingang zum Anschluss an ein Massepotential des Fahrzeugs und dem ersten Eingang wird eine zweipolige Versorgung des Ultraschallsensors gebildet.

Die Versorgungsleitung wird dabei durch die einzelnen Ultraschallsensoren jeweils fortgesetzt. Die Versorgungsleitung wird also durch einzelne Leitungsabschnitte gebildet, die über die Ultraschallsensoren jeweils miteinander verbunden sind. Alternativ kann aber auch beispielsweise eine galvanische Entkopplung in dem Ultraschallsensor erfolgen.

Das Datensignal kann auf prinzipiell unterschiedliche Weise moduliert und demoduliert werden. Verschiedene Verfahren sind als solche im Stand der Technik bekannt, um eine geeignete Modulation zu erzeugen. Die Modulation des Datensignals bewirkt eine Nutzung der Versorgungsleitung zur Übertragung von Daten zwischen den Ultraschallsensoren, so dass eine Kommunikation von einem Ultraschallsensor zu einem jeweils nachgeschalteten Ultraschallsensor erfolgen kann.

Das modulierte Datensignal wird über den ersten Eingang empfangen, d.h. eine Modulation des Datensignals erfolgt zusammen mit der Versorgung über die Versorgungsleitung. Ein Demodulator in dem Ultraschallsensor detektiert und dekodiert das Datensignal. Zusätzlich kann das Datensignal eine Adressierung aufweisen, um eine Datenübermittlung an einen bestimmten Ultraschallsensor durchzuführen.

Entsprechendes gilt für den Ausgang des Ultraschallsensors zum Anschluss als Versorgungsleitung. Die Versorgung nachfolgender Ultraschallsensoren erfolgt also über jeweils alle vorhergehenden Ultraschallsensoren. Dabei wird die Versorgungsspannung auf der Versorgungsleitung entsprechend moduliert, um Datensignale zu übertragen.

Das Abstandserkennungssystem ist ausgeführt, mit den Ultraschallsensoren Ultraschallmessungen durchzuführen, um durch Echos von abgestrahlten Ultraschallpulsen Objekte bzw., deren Abstände und/oder Positionen zu bestimmen.

Erfindungsgemäß ist der Ultraschallsensor ausgeführt, ein auf die Versorgungsleitung moduliertes Datensignal über den Ausgang zu empfangen, und über den ersten Eingang ein Datensignal auf die Versorgungsleitung zu modulieren. Entsprechend kann also nicht nur eine Kommunikation von einem in der Kette vorne angeordneten Ultraschallsensor zu einem nachgeordneten Ultraschallsensor erfolgen, sondern in einer beliebigen Richtung. Insbesondere kann jedes Datensignal so versendet werden, dass prinzipiell jeder weitere Ultraschallsensor die modulierten Daten von der Versorgungsleitung empfangen kann. Dies erfordert lediglich, dass die Versorgungsleitung durch die jeweiligen Ultraschallsensoren hindurch verbunden ist. Andernfalls müsste jeder Ultraschallsensor das modulierte Signal empfangen und wieder neu modulieren, entweder von seinem ersten Eingang zu seinem Ausgang, oder umgekehrt. Dadurch benötigt jeder Ultraschallsensor nur eine Vorrichtung zum Erzeugen eines auf die Versorgungsleitung modulierten Datensignals und eine entsprechende Vorrichtung zum Empfangen eines auf die Versorgungsleitung modulierten Datensignals. Die Vorrichtungen zum Erzeugen eines auf die Versorgungsleitung modulierten Datensignals und zum Empfangen eines auf die Versorgungsleitung modulierten Datensignals sind vorzugsweise zwischen einer Schaltvorrichtung und dem ersten Eingang positioniert, wobei die Schaltvorrichtung in einer Verbindungsleitung zwischen dem ersten Eingang und dem Ausgang angeordnet ist.

In vorteilhafter Ausgestaltung der Erfindung ist der Ultraschallsensor ausgeführt, eine Initialisierungsnachricht als moduliertes Datensignal auf der Versorgungsleitung zu empfangen, und eine Initialisierungsnachricht als moduliertes Datensignal auf der Versorgungsleitung zu versenden. Die empfangene Initialisierungsnachricht kann somit als Basis für die Initialisierung eines einzelnen Ultraschallsensors dienen. Da jeder Ultraschallsensor wiederum eine eigene Initialisierungsnachricht an einen nachfolgenden Ultraschallsensor versenden kann, erfolgt eine kaskadierte Initialisierung aller Ultraschallsensoren. Wenn ein Ultraschallsensor beispielsweise im Rahmen seiner Initialisierung erkennt, dass er der letzte Ultraschallsensor in der Kette der Ultraschallsensoren ist, kann ein weiteres Versenden der Initialisierungsnachricht durch diesen Ultraschallsensor unterbleiben. Entsprechend kann der Ultraschallsensor auch eine Initialisierung durchführen, wenn er keine Initialisierungsnachricht als moduliertes Datensignal empfängt. Der Ultraschallsensor erkennt in diesem Fall ein Ausbleiben der Initialisierungsnachricht, so dass der Ultraschallsensor erkennt, dass er der erste Ultraschallsensor in der Kette sein muss. Diese Initialisierung als erster Ultraschallsensor erfolgt beispielsweise nach Ablauf eines Timers, wenn in der Zeit keine Initialisierungsnachricht empfangen wurde.

Die Initialisierung erfolgt vorzugsweise basierend auf einem Inhalt der Initialisierungsnachricht. So kann beispielsweise der erste Ultraschallsensor in der von ihm versendeten Initialisierungsnachricht signalisieren, dass er der erste Ultraschallsensor ist. Entsprechend kann eine Signalisierung über die Initialisierungsnachrichten fortgesetzt werden, so dass jeder Ultraschallsensor seine Position in der Kette kennt. Wenn darüber hinaus noch der jeweils nachfolgende Ultraschallsensor von dem vorherigen Ultraschallsensor dadurch aktiviert wird, dass der vorherige Ultraschallsensor an seinem Ausgang die Versorgungsspannung aufschaltet, kann die Initialisierung der Kette besonders einfach durchgeführt werden.

In vorteilhafter Ausgestaltung der Erfindung weist der Ultraschallsensor einen Speicher mit vordefinierten Positionen zur Anordnung des Ultraschallsensors in einer Kette von Ultraschallsensoren auf, und der Ultraschallsensor ist ausgeführt, eine Initialisierung seiner Position in der Kette von Ultraschallsensoren basierend auf dem Empfang der Initialisierungsnachricht und den vordefinierten Positionen in dem Speicher durchzuführen. Die Ultraschallsensoren können beispielsweise eine generische Information in Bezug auf vordefinierte Positionen in ihrem Speicher enthalten, oder eine fahrzeugspezifische. Im letzten Fall können konstruktiv identische Ultraschallsensoren durch die in ihrem Speicher enthaltenen Informationen zur Verwendung in einem bestimmten Fahrzeug beschränkt werden. Der Speicher kann beispielsweise als Lookup-Tabelle ausgeführt sein. Darüber hinaus kann der Speicher Informationen in Bezug auf festgelegte Messsequenzen zur Durchführung von Abstandsmessungen abhängig von ihrer Position in der Kette oder im Fahrzeug enthalten.

In vorteilhafter Ausgestaltung der Erfindung ist der Ultraschallsensor ausgeführt, eine Initialisierung beim Anlegen einer Versorgungsspannung an den ersten Eingang durchzuführen. Die Initialisierung erfolgt also beispielsweise beim Einschalten des Fahrzeugs. Wenn das Abstandserkennungssystem jeweils erst bei einer Verwendung aktiviert wird, beispielsweise mit einem Schalter in der Versorgungsleitung, erfolgt die Initialisierung bei jeder Verwendung. Insbesondere in Kombination mit einer sequentiellen Versorgung der Ultraschallsensoren, wenn beispielsweise jeder Ultraschallsensor seinen Ausgang nach eigener Initialisierung aktiviert, kann eine einfache und effiziente Initialisierung aller Ultraschallsensoren der Kette erfolgen.

In vorteilhafter Ausgestaltung der Erfindung weist der Ultraschallsensor eine Schalteinrichtung auf, um eine Verbindungsleitung zwischen dem ersten Eingang und dem Ausgang zu unterbrechen bzw. leitend zu verbinden, wobei die Schalteinrichtung in einem initialen Zustand geöffnet ist, und der Ultraschallsensor ausgeführt ist, die Schalteinrichtung nach der Initialisierung schließen zu können. Die Verbindungsleitung ist also bei geschlossener Schalteinrichtung über den jeweiligen Ultraschallsensor durchverbunden. Die Kette der Ultraschallsensoren kann somit beginnend mit einem ersten Ultraschallsensor, der direkt an eine Spannungsversorgung des Fahrzeugs angeschlossen ist, sequentiell aktiviert werden. Bei einem letzten Ultraschallsensor der Kette kann der Ultraschallsensor die Schalteinrichtung schließen, um darüber eine Ansteuerung einer nachgeschalteten Signalisierungseinheit durchzuführen, beispielsweise um einen akustischen Signalgeber mit einer gewünschten Frequenz und Intensität anzusteuern. Bei dem letzten Ultraschallsensor kann also eine abweichende Ansteuerung der Schalteinrichtung erfolgen.

In vorteilhafter Ausgestaltung der Erfindung ist der Ultraschallsensor ausgeführt, eine Initialisierung seiner Position in einer Kette von Ultraschallsensoren durchzuführen, und der Ultraschallsensor ist ausgeführt, bei einer Initialisierung seiner Position als letzter Ultraschallsensor der Kette über seine Schalteinrichtung eine Ansteuerung für eine Signalisierungseinheit durchzuführen. Die Ansteuerung der nachgeschalteten Signalisierungseinheit kann im Falle eines akustischen Signalgebers durch eine Vorgabe einer gewünschten Signalfrequenz und -amplitude erfolgen. Die Ansteuerung erfolgt dabei beispielsweise in Abhängigkeit der von allen Ultraschallsensoren gemessenen und kommunizierten Abstände oder Winkel zu Objekten in der Fahrzeugumgebung. Über die Schalteinrichtung des letzten Ultraschallsensors der Kette wird die Versorgungsspannung an die Signalisierungseinheit angelegt.

In vorteilhafter Ausgestaltung der Erfindung ist der Ultraschallsensor ausgeführt, eine Ultraschallmessung durchzuführen, und ein Signal mit einer Information eines empfangenen Echos eines von dem Ultraschallsensor abgegebenen Ultraschallpulses als moduliertes Datensignal auf der Versorgungsleitung zu versenden. Das Echo kann zur Bestimmung eines Abstands eines Objekts von dem Ultraschallsensor ausgewertet werden. Prinzipiell könnte es möglich sein, alternativ oder zusätzlich das Echo zur Bestimmung einer Winkelposition des Objekts bezogen auf den Ultraschallsensor auszuwerten. Das Signal mit der Information eines empfangenen Echos kann Sensorinformationen des Ultraschallsensors enthalten, d.h. eine ermittelte Signallaufzeit eines reflektierten Ultraschallpulses, eine daraus bestimmte Entfernungsangabe, und/oder eine Winkelposition des Objekts. Darüber hinaus kann das Signal mit der Information des empfangenen Echos einen Abstandswert als gemessene Entfernung beinhalten, oder lediglich einen Bereich angeben, beispielsweise nahes Objekt, Objekt in mittlerer Entfernung, oder weit entferntes Objekt. Das Signal mit der Information des empfangenen Echos kann somit an einen Ultraschallsensor als Master oder einen letzten Ultraschallsensor der Kette übertragen werden, so dass der jeweilige Ultraschallsensor eine Signalisierungseinheit entsprechend ansteuern kann.

In vorteilhafter Ausgestaltung der Erfindung ist der Ultraschallsensor ausgeführt, ein Signal mit einer Information eines empfangenen Echos eines Ultraschallpulses als moduliertes Datensignal auf der Versorgungsleitung zu versenden. Das Echo kann unabhängig von einem von dem Ultraschallsensor selbst ausgesendeten Ultraschallpuls empfangen werden. Eine Verarbeitung der Information des empfangenen Echos kann durch einen anderen Ultraschallsensor unter zusätzlicher Kenntnis über abgestrahlte Ultraschallpulse erfolgen. Die Information des empfangenen Echos kann somit einen Zeitstempel umfassen. Alternativ oder zusätzlich kann die Information Informationen über das empfangene Echo umfassen, beispielsweise eine Intensität des Echos, eine Dauer, eine Kodierung, oder andere.

In einer alternativen Ausgestaltung der Erfindung ist einer der Ultraschallsensoren als Master konfiguriert, um die Ultraschallsensoren gemeinsam anzusteuern. Der Master kann die übrigen Ultraschallsensoren aktiv ansteuern, um Messungen zu synchronisieren. Auch kann der Ultraschallsensor als Master eine Ausgabe einer Warnung abhängig von einem erfassten Objekt durchführen. Der Ultraschallsensor als Master kann Sensorinformationen, d.h. ermittelte Signallaufzeiten von reflektierten Ultraschallpulsen oder daraus bestimmte Entfernungsangaben oder Winkelangaben, von allen Ultraschallsensoren empfangen, und darauf basierend die Warnung ausgeben.

In vorteilhafter Ausgestaltung der Erfindung sind die Ultraschallsensoren angeordnet und ausgeführt, eine sequentielle Initialisierung in einer Reihenfolge ihrer Verkettung durchzuführen. Dadurch kann auf einfache Weise eine Zuordnung der Ultraschallsensoren zu ihrer jeweiligen Position in der Kette erfolgen. Darüber kann beispielsweise eine Zuordnung zu Positionen der Ultraschallsensoren an dem Fahrzeug erfolgen.

In vorteilhafter Ausgestaltung der Erfindung ist das Abstandserkennungssystem ausgeführt, eine synchronisierte Abstandsmessung mit einer Mehrzahl Ultraschallsensoren durchzuführen. So können beispielsweise indirekte Signalwege abgestrahlter Ultraschallpulse berücksichtigt werden, d.h. einer der Ultraschallsensoren sendet Ultraschallpulse aus, und mehrere Ultraschallsensoren empfangen Echos dieser Ultraschallpulse. Unter Kenntnis der Positionen der Ultraschallsensoren in der Kette und der Positionen der Ultraschallsensoren an dem Fahrzeug kann beispielsweise eine Trilateration auf der Basis von mit verschiedenen Ultraschallsensoren empfangenen Echos und daraus bestimmten Entfernungen zu Objekten und/oder eine Triangulation auf der Basis von mit verschiedenen Ultraschallsensoren empfangenen Echos und daraus bestimmten Winkeln zu Objekten durchgeführt werden.

In vorteilhafter Ausgestaltung der Erfindung ist das Abstandserkennungssystem ausgeführt, eine Messsequenz mit einer Mehrzahl Ultraschallsensoren zur Abstandsmessung durchzuführen, wobei die Ultraschallsensoren abhängig von ihrer Position in der Kette die Messsequenz gemeinsam durchführen. Somit kann beispielsweise eine synchronisierte Erfassung von Objekten mit einer Mehrzahl Ultraschallsensoren gemeinsam durchgeführt werden, wobei die verschiedenen Ultraschallsensoren unterschiedlich agieren. Eine solche Bestimmung von Abständen von Objekten geht über eine Erfassung mit ausschließlich direkten Signalwegen von einem Ultraschallsensor zu dem Objekt und wieder zurück zu demselben Ultraschallsensor hinaus. Echos eines von einem Ultraschallsensor erzeugten Ultraschallpulses lassen sich somit zusätzlich von anderen Ultraschallsensoren empfangen und auswerten, wodurch auch ein Detektionsbereich vergrößert wird. Es wird zudem sichergestellt, dass beispielsweise immer der kürzeste Abstand zwischen dem Objekt und dem Fahrzeug korrekt erfasst wird. Die Abstandsmessungen können zum Beispiel nach festgelegten Messsequenzen erfolgen, die für jede potentielle Position eines Ultraschallsensors im Fahrzeug in jedem der Ultraschallsensoren hinterlegt sind. Damit kann ausgehend von einer bekannten Position in der Kette der Ultraschallsensoren jeweils die für jeden Ultraschallsensor zutreffende Aktion gemäß der Messsequenz durchgeführt werden.

In vorteilhafter Ausgestaltung der Erfindung ist das Abstandserkennungssystem ausgeführt, eine Ultraschallmessung durchzuführen, wobei wenigstens einer der Ultraschallsensoren einen Ultraschallpuls abgibt, und einer oder mehrere der Ultraschallsensoren ausgeführt sind, ein Signal mit einer Information eines empfangenen Echos des von dem wenigstens einen der Ultraschallsensoren abgegebenen Ultraschallpulses als moduliertes Datensignal auf der Versorgungsleitung zu versenden. Das Abstandserkennungssystem kann also mit mehreren Ultraschallsensoren gemeinsam eine Ultraschallmessung durchführen, wobei verschiedene der Ultraschallsensoren Echos von Ultraschallpulsen empfangen können. Gegenüber einem Empfang von Ultraschallechos nur mit dem Ultraschallsensor, der den Ultraschallpuls ausgesendet hat, kann eine verbesserte Erkennung von Objekten in der Umgebung der Ultraschallsensoren erfolgen. Die Echos können wie gewohnt zur Bestimmung eines Abstands eines Objekts von dem jeweiligen Ultraschallsensor ausgewertet werden. Darüber hinaus können die Echos auch gemeinsam ausgewertet werden. Prinzipiell könnte es möglich sein, alternativ oder zusätzlich die Echos zur Bestimmung einer Winkelposition des Objekts bezogen auf den Ultraschallsensor auszuwerten. Das Signal mit der Information eines empfangenen Echos kann jeweils als Sensorinformation des Ultraschallsensors ausgeführt sein, d.h. als eine ermittelte Signallaufzeit eines reflektierten Ultraschallpulses, eine daraus bestimmte Entfernungsangabe, und/oder eine Winkelposition des Objekts. Darüber hinaus kann das Signal mit der Information eines empfangenen Echos jeweils einen Abstandswert als gemessene Entfernung beinhalten, oder lediglich einen Bereich angeben, beispielsweise nahes Objekt, Objekt in mittlerer Entfernung, oder weit entferntes Objekt. Das Signal mit der Information eines empfangenen Echos kann jeweils an einen Ultraschallsensor als Master oder einen letzten Ultraschallsensor der Kette übertragen werden, so dass der jeweilige Ultraschallsensor eine Signalisierungseinheit entsprechend ansteuern kann. Auch kann dieser Ultraschallsensor eine gemeinsame Auswertung der empfangenen Echos durchführen.

In vorteilhafter Ausgestaltung der Erfindung weist das Abstandserkennungssystem einen Schalter auf, der zwischen der Versorgungsspannung und dem in der Kette ersten Ultraschallsensor angeschlossen ist, wobei der Schalter zur Kopplung mit einer Betätigungseinrichtung des Fahrzeugs zum Einlegen eines Rückwärtsganges ausgeführt ist. Durch die Kopplung mit der Betätigungseinrichtung kann das Abstandserkennungssystem bedarfsgerecht beim Rangieren, insbesondere beim Rückwärtsfahren aktiviert werden. Dies gilt insbesondere für ein rückwärtig an dem Fahrzeug angebrachtes Abstandserkennungssystem, aber prinzipiell auch bei einem Abstandserkennungssystem an einer Vorderseite des Fahrzeugs. Bei einem Abstandserkennungssystem an der Vorderseite des Fahrzeugs ist ggf. ein weiterer Schalter erforderlich, um das Abstandserkennungssystem zu aktivieren. Die Betätigungseinrichtung ist beispielsweise ein Schalthebel, kann aber auch eine Einrichtung sein, die über den Schalthebel bewegt wird, beispielsweise als Teil eines Schaltgestänges.

In vorteilhafter Ausgestaltung der Erfindung ist das Abstandserkennungssystem zum Anschluss an eine Spannungsversorgung eines Rückfahrscheinwerfers des Fahrzeugs als Versorgungsspannung ausgeführt. Damit kann bei einem in einem Fahrzeugheck angeordneten Abstandserkennungssystem, bei dem die Ultraschallsensoren beispielsweise in einer hinteren Stoßstange verbaut sind, eine Versorgung automatisch bedarfsgerecht beim Rückwärtsfahren erfolgen. Wenn der Rückfahrscheinwerfer nicht eingeschaltet ist, wird das Abstandserkennungssystem nicht mit elektrischer Energie versorgt und bleibt inaktiv. Diese Ausgestaltung ist außerdem vorteilhaft, weil die Spannungsversorgung des Rückfahrscheinwerfers in räumlicher Nähe zu dem im Fahrzeugheck angeordneten Abstandserkennungssystem angeordnet ist, so dass nur eine geringe Kabellänge erforderlich ist. Auch kann die Signalisierungseinheit, beispielsweise ein Tongeber, in einem hinteren Teil des Fahrzeugs mit kurzen Leitungswegen mit dem Abstandserkennungssystem verbunden werden.

Nachfolgend wird die Erfindung unter Bezugnahme auf die anliegende Zeichnung anhand bevorzugter Ausführungsformen näher erläutert. Die dargestellten Merkmale können sowohl jeweils einzeln als auch in Kombination einen Aspekt der Erfindung darstellen. Merkmale verschiedener Ausführungsbeispiele sind übertragbar von einem Ausführungsbeispiel auf ein anderes.

Es zeigt
- Fig. 1: eine schematische Ansicht eines Abstandserkennungssystems mit einer Mehrzahl Ultraschallsensoren und einer gemeinsam angesteuerten Warneinheit gemäß dem Stand der Technik,
- Fig. 2: eine schematische Ansicht eines Abstandserkennungssystems mit einer Mehrzahl Ultraschallsensoren und einer gemeinsam angesteuerten Signalisierungseinheit gemäß einer ersten, bevorzugten Ausführungsform, und
- Fig. 3: eine schematische Ansicht des Abstandserkennungssystems aus Fig. 2 mit den Ultraschallsensoren in einem an einer Stoßstange eines Fahrzeugs montierten Zustand und einer Erfassung eines beabstandeten Objekts.

Die Figur 2 zeigt ein Abstandserkennungssystem 110 für ein Fahrzeug 111 gemäß einer ersten, bevorzugten Ausführungsform.

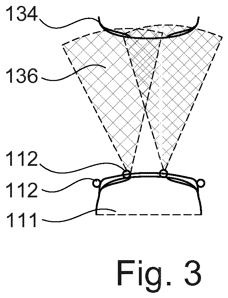

Das Abstandserkennungssystem 110 umfasst eine Mehrzahl Ultraschallsensoren 112, die nach der Art einer Kette hintereinandergeschaltet sind. Jeder Ultraschallsensor 112 hat einen an sich üblichen Aufbau mit einer Ultraschallmembran und einem Wandler, üblicherweise einem piezoelektrischen Wandler, um Ultraschallpulse 136 auszusenden und Echos von Ultraschallpulsen 136 zu empfangen. Figur 3 zeigt eine Anordnung der Ultraschallsensoren 112, die solche Ultraschallpulse 136 aussenden, an dem Fahrzeug 111.

Jeder der Ultraschallsensoren 112 weist jeweils einen ersten Eingang 114 zum Anschluss an eine Versorgungsleitung 116 und einen zweiten Eingang 118 zum Anschluss an ein Massepotential 120 des Fahrzeugs 111 auf. Über den ersten und den zweiten Eingang 114, 118 wird eine zweipolige Versorgung des Ultraschallsensors 112 durchgeführt. Jeder Ultraschallsensor 112 weist außerdem einen Ausgang 122 zum Anschluss einer Versorgungsleitung 116 auf. Die Ultraschallsensoren 112 sind zu der Kette verbunden, indem der Ausgang 122 eines in der Kette vorherigen Ultraschallsensors 112 mit dem ersten Eingang 114 des jeweils nachfolgenden Ultraschallsensors 112 verbunden ist. Die Versorgung nachfolgender Ultraschallsensoren 112 erfolgt also über jeweils alle vorhergehenden Ultraschallsensoren 112.

Ein erster Ultraschallsensor 112 in der Kette ist an seinem ersten Eingang 114 an eine Versorgungsspannung 124 angeschlossen. Zwischen der Versorgungsspannung 124 und dem ersten Ultraschallsensor 112 in der Kette ist in der Versorgungsleitung 116 ein Schalter 126 angeordnet. Der Schalter 126 ist mit einem Schalthebel des Fahrzeugs 111 gekoppelt, so dass der Schalter 126 beim Einlegen eines Rückwärtsganges geschlossen wird.

Ein in der Kette letzter Ultraschallsensor 112 ist mit seinem Ausgang 122 an eine Signalisierungseinheit 128 angeschlossen. Die Signalisierungseinheit 128 ist hier als Tongeber 128 ausgeführt. Der Tongeber 128 ist an die Versorgungsleitung 116 und das Massepotential 120 angeschlossen und erzeugt einen Ton, wenn an der Versorgungsleitung 116 die Versorgungsspannung 124 anliegt.

Jeder Ultraschallsensor 112 weist eine Schalteinrichtung 130 auf, um die Verbindungsleitung 116 zwischen dem ersten Eingang 114 und dem Ausgang 122 zu unterbrechen bzw. leitend zu verbinden. In einem initialen Zustand ist die Schalteinrichtung 130 geöffnet. Der letzte Ultraschallsensor 112 der Kette kann mit seiner Schalteinrichtung 130 eine Ansteuerung des Tongebers 128 durchführen, indem die Schalteinrichtung 130 die Versorgungsspannung 124 an den Tongeber 128 durchschaltet, beispielsweise in der Form von Pulsen.

Jeder Ultraschallsensor 112 weist außerdem einen Modulator/Demodulator 132 auf, der zwischen der Schaltvorrichtung 130 und dem ersten Eingang 114 positioniert ist. Der Modulator/Demodulator 132 ist ausgeführt, ein auf die Versorgungsleitung 116 moduliertes Datensignal zu empfangen und ein Datensignal auf die Versorgungsleitung 116 zu modulieren. Das modulierte Datensignal wird bei geöffneter Schalteinrichtung 130 nur über den ersten Eingang 114 empfangen. Bei geschlossener Schalteinrichtung 130 kann das modulierte Datensignal sowohl über den ersten Eingang 114 wie auch über den Ausgang 122 empfangen werden. Entsprechendes gilt für das Modulieren des Datensignals auf die Versorgungsleitung 116. Das modulierte Datensignal wird bei geschlossener Schalteinrichtung 130 sowohl über den Ausgang wie auch über den ersten Eingang bereitgestellt.

Weiter weist jeder Ultraschallsensor 112 einen Speicher mit vordefinierten Positionen zur Anordnung des Ultraschallsensors 112 in der Kette der Ultraschallsensoren 112 auf. In dem Speicher sind fahrzeugspezifische Informationen in Bezug auf vordefinierte Positionen der Ultraschallsensoren 112 in der Kette und - daraus resultierend - an dem Fahrzeug 111 enthalten. Der Speicher ist als Lookup-Tabelle ausgeführt und enthält zusätzlich Informationen in Bezug auf festgelegte Messsequenzen zur Durchführung von Abstandsmessungen in Abhängigkeit der Position eines Ultraschallsensors 112 in der Kette und am Fahrzeug 111.

Jeder Ultraschallsensor 112 ist ausgeführt, eine Initialisierung seiner Position in der Kette von Ultraschallsensoren 112 basierend auf dem Empfang der Initialisierungsnachricht und den vordefinierten Positionen in dem Speicher durchzuführen. Der in der Kette erste Ultraschallsensor 112 wird beim Schließen des Schalters 126 aktiviert. Seine Schalteinrichtung 130 ist geöffnet, so dass nachgeschaltete Ultraschallsensoren 112 zunächst stromlos und damit inaktiv bleiben. Der aktivierte erste Ultraschallsensor 112 startet seine Initialisierung beim Anlegen der Versorgungsspannung 124 an seinen ersten Eingang 114 über die Versorgungsleitung 116.

Jeder Ultraschallsensor 112 ist ausgeführt, eine Initialisierungsnachricht als moduliertes Datensignal auf der Versorgungsleitung 116 zu empfangen. Der erste Ultraschallsensor 112 erkennt ein Ausbleiben der Initialisierungsnachricht, so dass der Ultraschallsensor 112 erkennt, dass er der erste Ultraschallsensor 112 in der Kette sein muss. Die Initialisierung des ersten Ultraschallsensors 112 erfolgt entsprechend nach Ablauf eines Timers basierend auf der ausbleibenden Initialisierungsnachricht.

Der erste Ultraschallsensor 112 führt die Initialisierung basierend auf den Informationen in dem Speicher für den ersten Ultraschallsensor 112 aus. Außerdem schließt der erste Ultraschallsensor 112 seine Schalteinrichtung 130 nach der Initialisierung, so dass über seinen Ausgang 122 die Versorgungsspannung 124 an den ersten Eingang 114 des nachfolgenden Ultraschallsensors 112 durchgeschaltet wird. Entsprechend wird der nachfolgende Ultraschallsensor 112 aktiviert und startet seine Initialisierung. Nach dem Schließen der Schalteinrichtung 130 versendet der erste Ultraschallsensor 112 eine Initialisierungsnachricht als moduliertes Datensignal auf der Versorgungsleitung 116, die von dem nachfolgenden Ultraschallsensor 112 empfangen wird und als Basis für dessen Initialisierung dient. Jeder Ultraschallsensor 112 signalisiert in seiner Initialisierungsnachricht seine Position in der Kette.

Nachfolgende Ultraschallsensoren 112 werden sequentiell in einer Reihenfolge ihrer Verkettung initialisiert. Die Initialisierung erfolgt prinzipiell wie oben in Bezug auf den ersten und zweiten Ultraschallsensor 112 beschrieben. Es erfolgt eine Zuordnung der Ultraschallsensoren 112 zu ihrer jeweiligen Position in der Kette. Darüber erfolgt wiederum eine Zuordnung zu Positionen der Ultraschallsensoren 112 an dem Fahrzeug 111.

Wenn ein Ultraschallsensor 112 im Rahmen seiner Initialisierung erkennt, dass er der letzte Ultraschallsensor 112 in der Kette der Ultraschallsensoren 112 ist, wird die Initialisierung abgeschlossen, ohne dass die Schalteinrichtung 130 des letzten Ultraschallsensors 112 geschlossen wird. Auch ein Versenden einer Initialisierungsnachricht durch diesen Ultraschallsensor 112 unterbleibt. Stattdessen wird der letzte Ultraschallsensor 112 der Kette initialisiert und konfiguriert, über seine Schalteinrichtung 130 eine Ansteuerung des Tongebers 128 durchzuführen, indem der Tongeber 128 mit einer gewünschten Frequenz und Amplitude angesteuert wird.

Im Betrieb, d.h. nach der Initialisierung, ist das Abstandserkennungssystem 110 konfiguriert, eine synchronisierte Abstandsmessung mit einer Mehrzahl Ultraschallsensoren 112 durchzuführen. Von jedem Ultraschallsensor 112 können Ultraschallpulse 136 abgestrahlt werden, um ein Objekt 134 zu detektieren, wie in Fig. 3 schematisch dargestellt ist. Bei der synchronisierten Abstandsmessung werden Signalwege abgestrahlter Ultraschallpulse 136 berücksichtigt, die von demselben Ultraschallsensor 112 empfangen werden, wie auch indirekte Echos von Ultraschallpulsen 136, d.h. einer der Ultraschallsensoren 112 sendet Ultraschallpulse 136 aus, und wenigstens ein anderer Ultraschallsensor 112 empfängt darauf basierende indirekte Echos. Unter Kenntnis der Positionen der Ultraschallsensoren 112 in der Kette und der Position der Ultraschallsensoren 112 an dem Fahrzeug 11 wird beispielsweise eine Trilateration auf der Basis von mit verschiedenen Ultraschallsensoren 112 empfangenen Echos und daraus resultierenden Entfernungen von Objekten 134 durchgeführt. Auch kann das Abstandserkennungssystem 110 Messsequenzen mit einer Mehrzahl Ultraschallsensoren 112 zur Abstandsmessung durchführen, wobei die Ultraschallsensoren 112 abhängig von ihrer Position in der Kette die Messsequenz gemeinsam durchführen.

Bei der so durchgeführten Abstandsmessung wird von jedem Ultraschallsensor 112 ein Abstandssignal als moduliertes Datensignal auf der Versorgungsleitung 116 versendet. Das Abstandssignal enthält Sensorinformation des jeweiligen Ultraschallsensors 112 beispielsweise eine Signallaufzeit von reflektierten Ultraschallpulsen 136 und/oder eine daraus bestimmte Entfernungsangabe des Objekts 134. Das modulierte Datensignal mit dem Abstandssignal wird auch von dem letzten Ultraschallsensor 112 der Kette empfangen, so dass der letzte Ultraschallsensor 112 den Tongeber 128 darauf basierend ansteuert, um den Abstand zu dem Objekt 134 akustisch auszugeben.

In einer alternativen Ausführungsform ist das Abstandserkennungssystem 110 unmittelbar zum Anschluss an eine Spannungsversorgung eines Rückfahrscheinwerfers des Fahrzeugs 111 als Versorgungsspannung 124 ausgeführt. Ein Schalter 126 zur Aktivierung der Ultraschallsensoren 112 durch ein Anlegen der Versorgungsspannung 124 kann entfallen. Im Übrigen erfolgt die Initialisierung der Ultraschallsensoren 112 des Abstandserkennungssystems 110 wie auch ein nachfolgender Betrieb wie zuvor beschrieben.

### Bezugszeichenliste

- 10: Abstandserkennungssystem (Stand der Technik)
- 12: Ultraschallsensor (Stand der Technik)
- 14: Versorgungsleitung (Stand der Technik)
- 16: Masse (Stand der Technik)
- 18: Versorgungsspannung (Stand der Technik)
- 20: Warneinheit (Stand der Technik)
- 22: Schalter (Stand der Technik)

- 110: Abstandserkennungssystem
- 112: Ultraschallsensor
- 114: erster Eingang
- 116: Versorgungsleitung
- 118: zweiter Eingang
- 120: Massepotential
- 122: Ausgang
- 124: Versorgungsspannung
- 126: Schalter
- 128: Signalisierungseinheit, Tongeber
- 130: Schalteinrichtung
- 132: Modulator/Demodulator
- 134: Objekt
- 136: Ultraschallpuls

## Patentansprüche

1. Ultraschallsensor (112) zur Verwendung in einem Abstandserkennungssystem (110) für ein Fahrzeug (111), wobei der Ultraschallsensor (112) zur gemeinsamen Anbringung mit wenigstens einem weiteren Ultraschallsensor (112) ausgeführt ist,
**dadurch gekennzeichnet, dass**
der Ultraschallsensor (112) einen ersten Eingang (114) zum Anschluss an eine Versorgungsleitung (116) aufweist,
der Ultraschallsensor (112) einen zweiten Eingang (118) zum Anschluss an ein Massepotential (120) des Fahrzeugs (111) aufweist, und
der Ultraschallsensor (112) einen Ausgang (122) zum Anschluss an die Versorgungsleitung (116) aufweist, wobei
der Ultraschallsensor (112) ausgeführt ist, ein auf die Versorgungsleitung (116) moduliertes Datensignal über den ersten Eingang (114) zu empfangen, und über den Ausgang (122) ein Datensignal auf die Versorgungsleitung (116) zu modulieren,
**dadurch gekennzeichnet, dass**
der Ultraschallsensor (112) ausgeführt ist, ein auf die Versorgungsleitung (116) moduliertes Datensignal über den Ausgang (122) zu empfangen, und über den ersten Eingang (114) ein Datensignal auf die Versorgungsleitung (116) zu modulieren.

2. Ultraschallsensor (112) nach Anspruch 1, **dadurch gekennzeichnet, dass**
der Ultraschallsensor (112) ausgeführt ist, eine Initialisierungsnachricht als moduliertes Datensignal auf der Versorgungsleitung (116) zu empfangen, und eine Initialisierungsnachricht als moduliertes Datensignal auf der Versorgungsleitung (116) zu versenden.

3. Ultraschallsensor (112) nach Anspruch 2, **dadurch gekennzeichnet, dass**
der Ultraschallsensor (112) einen Speicher mit vordefinierten Positionen zur Anordnung des Ultraschallsensors (112) in einer Kette von Ultraschallsensoren (112) aufweist, und
der Ultraschallsensor (112) ausgeführt ist, eine Initialisierung seiner Position in der Kette von Ultraschallsensoren (112) basierend auf dem Empfang der Initialisierungsnachricht und den vordefinierten Positionen in dem Speicher durchzuführen.

4. Ultraschallsensor (112) nach einem der vorhergehenden Ansprüche, **dadurch gekennzeichnet, dass**
der Ultraschallsensor (112) ausgeführt ist, eine Initialisierung beim Anlegen einer Versorgungsspannung (124) an den ersten Eingang (114) durchzuführen.

5. Ultraschallsensor (112) nach Anspruch 4, **dadurch gekennzeichnet, dass**
der Ultraschallsensor (112) eine Schalteinrichtung (130) aufweist, um eine Verbindungsleitung zwischen dem ersten Eingang (114) und dem Ausgang (122) zu unterbrechen bzw. leitend zu verbinden, wobei die Schalteinrichtung (130) in einem initialen Zustand geöffnet ist, und
der Ultraschallsensor (112) ausgeführt ist, die Schalteinrichtung (130) nach der Initialisierung schließen zu können.

6. Ultraschallsensor (112) nach Anspruch 5, **dadurch gekennzeichnet, dass**
der Ultraschallsensor (112) ausgeführt ist, eine Initialisierung seiner Position in einer Kette von Ultraschallsensoren (112) durchzuführen, und
der Ultraschallsensor (112) ausgeführt ist, bei einer Initialisierung seiner Position als letzter Ultraschallsensor (112) der Kette über seine Schalteinrichtung (130) eine Ansteuerung für eine Signalisierungseinheit (128) durchzuführen.

7. Abstandserkennungssystem (110) für ein Fahrzeug (111) mit einer Mehrzahl Ultraschallsensoren (112) nach einem der vorhergehenden Ansprüche 1 bis 6, **dadurch gekennzeichnet, dass**
die Ultraschallsensoren (112) nach der Art einer Kette hintereinandergeschaltet sind, wobei der Ausgang (122) eines vorhergehenden Ultraschallsensors (112) mit dem ersten Eingang (114) eines nachfolgenden Ultraschallsensors (112) verbunden ist,
ein in der Kette erster Ultraschallsensor (112) mit seinem ersten Eingang (114) an eine Versorgungsspannung (124) angeschlossen ist, und
ein in der Kette letzter Ultraschallsensor (112) mit seinem Ausgang (122) an eine Signalisierungseinheit (128) angeschlossen ist.

8. Abstandserkennungssystem (110) nach Anspruch 7, **dadurch gekennzeichnet, dass**
einer der Ultraschallsensoren (112) als Master konfiguriert ist, um die Ultraschallsensoren (112) gemeinsam anzusteuern.

9. Abstandserkennungssystem (110) nach einem der vorhergehenden Ansprüche 7 oder 8, **dadurch gekennzeichnet, dass**
die Ultraschallsensoren (112) angeordnet und ausgeführt sind, eine sequentielle Initialisierung in einer Reihenfolge ihrer Verkettung durchzuführen.

10. Abstandserkennungssystem (110) nach einem der vorhergehenden Ansprüche 7 bis 9, **dadurch gekennzeichnet, dass**
das Abstandserkennungssystem (110) ausgeführt ist, eine synchronisierte Abstandsmessung mit einer Mehrzahl Ultraschallsensoren (112) durchzuführen.

11. Abstandserkennungssystem (110) nach einem der vorhergehenden Ansprüche 7 bis 10, **dadurch gekennzeichnet, dass**
das Abstandserkennungssystem (110) ausgeführt ist, eine Messsequenz mit einer Mehrzahl Ultraschallsensoren (112) durchzuführen, wobei die Ultraschallsensoren (112) abhängig von ihrer Position in der Kette die Messsequenz gemeinsam durchführen.

12. Abstandserkennungssystem (110) nach einem der vorhergehenden Ansprüche 7 bis 11, **dadurch gekennzeichnet, dass**
das Abstandserkennungssystem (110) ausgeführt ist, eine Ultraschallmessung durchzuführen, wobei wenigstens einer der Ultraschallsensoren (112) einen Ultraschallpuls (136) abgibt, und einer oder mehrere der Ultraschallsensoren (112) ausgeführt sind, ein Signal mit einer Information eines empfangenen Echos des von dem wenigstens einen der Ultraschallsensoren (112) abgegebenen Ultraschallpulses (136) als moduliertes Datensignal auf der Versorgungsleitung (116) zu versenden.

13. Abstandserkennungssystem (110) nach einem der vorhergehenden Ansprüche 7 bis 12, **dadurch gekennzeichnet, dass**
das Abstandserkennungssystem (110) einen Schalter (126) aufweist, der zwischen der Versorgungsspannung (124) und dem in der Kette ersten Ultraschallsensor (112) angeschlossen ist, wobei
der Schalter (126) zur Kopplung mit einer Betätigungseinrichtung des Fahrzeugs (111) zum Einlegen eines Rückwärtsganges ausgeführt ist.

14. Abstandserkennungssystem (110) nach einem der vorhergehenden Ansprüche 8 bis 12, **dadurch gekennzeichnet, dass**
das Abstandserkennungssystem (110) zum Anschluss an eine Spannungsversorgung eines Rückfahrscheinwerfers des Fahrzeugs (111) als Versorgungsspannung (124) ausgeführt ist.

## Claims

1. Ultrasonic sensor (112) for use in a distance detection system (110) for a vehicle (111), wherein the ultrasonic sensor (112) is designed for joint mounting with at least one further ultrasonic sensor (112), **characterized in that** the ultrasonic sensor (112) has a first input (114) for connection to a supply line (116), the ultrasonic sensor (112) has a second input (118) for connection to a ground potential (120) of the vehicle (111), and the ultrasonic sensor (112) has an output (122) for connection to the supply line (116), wherein the ultrasonic sensor (112) is designed to receive a data signal modulated onto the supply line (116) via the first input (114), and to modulate a data signal onto the supply line (116) via the output (122), **characterized in that** the ultrasonic sensor (112) is designed to receive a data signal modulated onto the supply line (116) via the output (122), and to modulate a data signal onto the supply line (116) via the first input (114).

2. Ultrasonic sensor (112) according to claim 1, **characterized in that** the ultrasonic sensor (112) is designed to receive an initialization message as a modulated data signal on the supply line (116), and to transmit an initialization message as a modulated data signal on the supply line (116).

3. Ultrasonic sensor (112) according to claim 2, **characterized in that** the ultrasonic sensor (112) has a memory with predefined positions for arranging the ultrasonic sensor (112) in a chain of ultrasonic sensors (112), and the ultrasonic sensor (112) is designed to perform an initialization of its position in the chain of ultrasonic sensors (112) based on the reception of the initialization message and the predefined positions in the memory.

4. Ultrasonic sensor (112) according to any one of the preceding claims, **characterized in that** the ultrasonic sensor (112) is designed to perform an initialization when a supply voltage (124) is applied to the first input (114).

5. Ultrasonic sensor (112) according to claim 4, **characterized in that** the ultrasonic sensor (112) has a switching device (130) to interrupt or conductively connect a connection line between the first input (114) and the output (122), wherein the switching device (130) is open in an initial state, and the ultrasonic sensor (112) is designed to be able to close the switching device (130) after initialization.

6. Ultrasonic sensor (112) according to claim 5, **characterized in that** the ultrasonic sensor (112) is designed to perform an initialization of its position in a chain of ultrasonic sensors (112), and the ultrasonic sensor (112) is designed, when initializing its position as the last ultrasonic sensor (112) of the chain, to perform a control for a signaling unit (128) via its switching device (130).

7. Distance detection system (110) for a vehicle (111) with a plurality of ultrasonic sensors (112) according to any one of the preceding claims 1 to 6, **characterized in that** the ultrasonic sensors (112) are connected in series in the manner of a chain, wherein the output (122) of a preceding ultrasonic sensor (112) is connected to the first input (114) of a subsequent ultrasonic sensor (112), a first ultrasonic sensor (112) in the chain is connected with its first input (114) to a supply voltage (124), and a last ultrasonic sensor (112) in the chain is connected with its output (122) to a signaling unit (128).

8. Distance detection system (110) according to claim 7, **characterized in that** one of the ultrasonic sensors (112) is configured as a master to jointly control the ultrasonic sensors (112).

9. Distance detection system (110) according to any one of the preceding claims 7 or 8, **characterized in that** the ultrasonic sensors (112) are arranged and designed to perform a sequential initialization in an order of their chaining.

10. Distance detection system (110) according to any one of the preceding claims 7 to 9, **characterized in that** the distance detection system (110) is designed to perform a synchronized distance measurement with a plurality of ultrasonic sensors (112).

11. Distance detection system (110) according to any one of the preceding claims 7 to 10, **characterized in that** the distance detection system (110) is designed to perform a measurement sequence with a plurality of ultrasonic sensors (112), wherein the ultrasonic sensors (112) jointly perform the measurement sequence depending on their position in the chain.

12. Distance detection system (110) according to any one of the preceding claims 7 to 11, **characterized in that** the distance detection system (110) is designed to perform an ultrasonic measurement, wherein at least one of the ultrasonic sensors (112) emits an ultrasonic pulse (136), and one or more of the ultrasonic sensors (112) are designed to transmit a signal with information of a received echo of the ultrasonic pulse (136) emitted by the at least one of the ultrasonic sensors (112) as a modulated data signal on the supply line (116).

13. Distance detection system (110) according to any one of the preceding claims 7 to 12, **characterized in that** the distance detection system (110) has a switch (126) that is connected between the supply voltage (124) and the first ultrasonic sensor (112) in the chain, wherein the switch (126) is designed for coupling with an actuating device of the vehicle (111) for engaging a reverse gear.

14. Distance detection system (110) according to any one of the preceding claims 8 to 12, **characterized in that** the distance detection system (110) is designed for connection to a voltage supply of a reversing light of the vehicle (111) as a supply voltage (124).

## Revendications

1. Capteur à ultrasons (112) destiné à être utilisé dans un système de détection de distance (110) pour un véhicule (111), le capteur à ultrasons (112) étant conçu pour être monté conjointement avec au moins un autre capteur à ultrasons (112), **caractérisé en ce que** le capteur à ultrasons (112) comprend une première entrée (114) pour la connexion à une ligne d'alimentation (116), le capteur à ultrasons (112) comprend une deuxième entrée (118) pour la connexion à un potentiel de masse (120) du véhicule (111), et le capteur à ultrasons (112) comprend une sortie (122) pour la connexion à la ligne d'alimentation (116), le capteur à ultrasons (112) étant conçu pour recevoir un signal de données modulé sur la ligne d'alimentation (116) via la première entrée (114), et pour moduler un signal de données sur la ligne d'alimentation (116) via la sortie (122), **caractérisé en ce que** le capteur à ultrasons (112) est conçu pour recevoir un signal de données modulé sur la ligne d'alimentation (116) via la sortie (122), et pour moduler un signal de données sur la ligne d'alimentation (116) via la première entrée (114).

2. Capteur à ultrasons (112) selon la revendication 1, **caractérisé en ce que** le capteur à ultrasons (112) est conçu pour recevoir un message d'initialisation sous forme de signal de données modulé sur la ligne d'alimentation (116), et pour envoyer un message d'initialisation sous forme de signal de données modulé sur la ligne d'alimentation (116).

3. Capteur à ultrasons (112) selon la revendication 2, **caractérisé en ce que** le capteur à ultrasons (112) comprend une mémoire avec des positions prédéfinies pour l'arrangement du capteur à ultrasons (112) dans une chaîne de capteurs à ultrasons (112), et le capteur à ultrasons (112) est conçu pour effectuer une initialisation de sa position dans la chaîne de capteurs à ultrasons (112) sur la base de la réception du message d'initialisation et des positions prédéfinies dans la mémoire.

4. Capteur à ultrasons (112) selon l'une des revendications précédentes, **caractérisé en ce que** le capteur à ultrasons (112) est conçu pour effectuer une initialisation lors de l'application d'une tension d'alimentation (124) à la première entrée (114).

5. Capteur à ultrasons (112) selon la revendication 4, **caractérisé en ce que** le capteur à ultrasons (112) comprend un dispositif de commutation (130) pour interrompre ou connecter de manière conductrice une ligne de connexion entre la première entrée (114) et la sortie (122), le dispositif de commutation (130) étant ouvert dans un état initial, et le capteur à ultrasons (112) étant conçu pour pouvoir fermer le dispositif de commutation (130) après l'initialisation.

6. Capteur à ultrasons (112) selon la revendication 5, **caractérisé en ce que** le capteur à ultrasons (112) est conçu pour effectuer une initialisation de sa position dans une chaîne de capteurs à ultrasons (112), et le capteur à ultrasons (112) est conçu pour effectuer, lors d'une initialisation de sa position en tant que dernier capteur à ultrasons (112) de la chaîne, une commande pour une unité de signalisation (128) via son dispositif de commutation (130).

7. Système de détection de distance (110) pour un véhicule (111) comprenant une pluralité de capteurs à ultrasons (112) selon l'une des revendications précédentes 1 à 6, **caractérisé en ce que** les capteurs à ultrasons (112) sont connectés en série à la manière d'une chaîne, la sortie (122) d'un capteur à ultrasons (112) précédent étant connectée à la première entrée (114) d'un capteur à ultrasons (112) suivant, un premier capteur à ultrasons (112) dans la chaîne étant connecté par sa première entrée (114) à une tension d'alimentation (124), et un dernier capteur à ultrasons (112) dans la chaîne étant connecté par sa sortie (122) à une unité de signalisation (128).

8. Système de détection de distance (110) selon la revendication 7, **caractérisé en ce que** l'un des capteurs à ultrasons (112) est configuré comme maître pour commander conjointement les capteurs à ultrasons (112).

9. Système de détection de distance (110) selon l'une des revendications précédentes 7 ou 8, **caractérisé en ce que** les capteurs à ultrasons (112) sont disposés et conçus pour effectuer une initialisation séquentielle dans l'ordre de leur enchaînement.

10. Système de détection de distance (110) selon l'une des revendications précédentes 7 à 9, **caractérisé en ce que** le système de détection de distance (110) est conçu pour effectuer une mesure de distance synchronisée avec une pluralité de capteurs à ultrasons (112).

11. Système de détection de distance (110) selon l'une des revendications précédentes 7 à 10, **caractérisé en ce que** le système de détection de distance (110) est conçu pour effectuer une séquence de mesure avec une pluralité de capteurs à ultrasons (112), les capteurs à ultrasons (112) effectuant conjointement la séquence de mesure en fonction de leur position dans la chaîne.

12. Système de détection de distance (110) selon l'une des revendications précédentes 7 à 11, **caractérisé en ce que** le système de détection de distance (110) est conçu pour effectuer une mesure par ultrasons, au moins l'un des capteurs à ultrasons (112) émettant une impulsion ultrasonore (136), et un ou plusieurs des capteurs à ultrasons (112) étant conçus pour envoyer un signal contenant une information d'un écho reçu de l'impulsion ultrasonore (136) émise par l'au moins un des capteurs à ultrasons (112) sous forme de signal de données modulé sur la ligne d'alimentation (116).

13. Système de détection de distance (110) selon l'une des revendications précédentes 7 à 12, **caractérisé en ce que** le système de détection de distance (110) comprend un commutateur (126) qui est connecté entre la tension d'alimentation (124) et le premier capteur à ultrasons (112) dans la chaîne, le commutateur (126) étant conçu pour être couplé à un dispositif d'actionnement du véhicule (111) pour engager une marche arrière.

14. Système de détection de distance (110) selon l'une des revendications précédentes 8 à 12, **caractérisé en ce que** le système de détection de distance (110) est conçu pour être connecté à une alimentation électrique d'un feu de recul du véhicule (111) en tant que tension d'alimentation (124).
